# EUROPEAN PATENT APPLICATION

(11) **EP 4 814 328 A1**
(43) Date of publication of application: **30.09.2026**
(21) Application number: 24893847.4
(22) Date of filing: 18.09.2024
(51) Int. Cl.: F16C 29/08, A44B 19/00

(54) **LINEAR MOTION UNIT**

(30) Priority: 21.11.2023 JP 2023197182
(71) Applicant: Nippon Thompson Co., Ltd., Tokyo 108-8586 (JP)
(72) Inventor: NAKAMURA Tomoaki, Mino-shi, Gifu 501-3763 (JP); KAWASHIMA Takafumi, Mino-shi, Gifu 501-3763 (JP)
(74) Representative: Isarpatent
(86) International application number: PCT/JP2024/033222
(87) International publication number: WO 2025/109852

(57) **Abstract**

A linear motion unit includes a linear motion mechanism and an enclosure. The linear motion mechanism includes a raceway member and a moving member. The enclosure includes a cover member that covers the linear motion mechanism. The cover member includes a fastener that extends in the longitudinal direction. The fastener includes a first element, a second element, a first slider, and a second slider. The first slider and the second slider each separate the first element and the second element from each other as the slider moves in a direction opposite to a side where the other slider is located, and engage the first element and the second element with each other as the slider moves in a direction toward the side where the other slider is located. The first and second sliders can be fixed to the moving member. The fastener extends to reach at least one end of the cover member in the longitudinal direction. The one end of the cover member is configured to be openable and closable.

## Description

### Technical Field

The present disclosure relates to a linear motion unit. The present application claims priority based on Japanese Patent Application No. 2023-197182 filed on November 21, 2023, the entire contents of which are incorporated herein by reference.

### Background Art

Conventionally, linear motion units in which a linear motion mechanism is housed in an enclosure for the purposes of achieving dust-proof and water-proof properties have been known. The technique of this type is described in Patent Literature 1 and Patent Literature 2, for example. Patent Literature 1 discloses a linear motion unit in which a ball screw, which is the linear motion mechanism, is housed in an enclosure. In this literature, the enclosure is formed by combining a bottom plate on which the ball screw is mounted, a pair of side plates, and a top plate.

### Citation List

### Patent Literature

Patent Literature 1: Japanese Patent Application Laid-Open No. 2000-230618
Patent Literature 2: Japanese Patent Application Laid-Open No. 2017-109580

### Summary of Invention

### Technical Problem

In a linear motion unit with a linear motion mechanism housed in an enclosure, a cover member that covers the linear motion mechanism may be provided with a fastener. Such a configuration facilitates ensuring a high level of sealing in the enclosure. Here, there are cases where the cover member needs to be replaced before the linear motion unit reaches the end of its service life. If the workload required for this replacement increases, the replacement task will become troublesome. Improved workability is desired at the time of replacement of the cover member. Therefore, one of the objects is to provide a linear motion unit capable of improving workability during replacement of the cover member.

### Solution to Problem

A linear motion unit according to the present disclosure includes: a linear motion mechanism; and an enclosure that houses the linear motion mechanism. The linear motion mechanism includes a raceway member, and a moving member that is linearly movable along a longitudinal direction of the raceway member. The enclosure includes a cover member that covers the linear motion mechanism. The cover member includes a fastener that extends in the longitudinal direction. The fastener includes a first element extending in the longitudinal direction, a second element extending in the longitudinal direction along the first element and engageable with the first element, a first slider attached to the first and second elements, and a second slider attached to the first and second elements and located apart from the first slider in the longitudinal direction. The first slider and the second slider each separate the first element and the second element from each other as the slider moves in a direction opposite to a side where the other slider is located, and engage the first element and the second element with each other as the slider moves in a direction toward the side where the other slider is located. The first and second sliders can be fixed to the moving member. The fastener extends to reach at least one end of the cover member in the longitudinal direction. The one end of the cover member is configured to be openable and closable.

### Advantageous Effects of Invention

The linear motion unit described above can improve workability during replacement of the cover member.

### Brief Description of Drawings

[FIG. 1] FIG. 1 is a schematic perspective view of a linear motion unit in Embodiment 1 of the present disclosure.
[FIG. 2] FIG. 2 is a schematic perspective view of the linear motion unit shown in FIG. 1, with a cover member, described later, removed.
[FIG. 3] FIG. 3 is a schematic plan view of the linear motion unit shown in FIG. 1.
[FIG. 4] FIG. 4 is a schematic side view of the linear motion unit shown in FIG. 1.
[FIG. 5] FIG. 5 is a schematic front view of the linear motion unit shown in FIG. 1.
[FIG. 6] FIG. 6 is a schematic cross-sectional view of the linear motion unit shown in FIG. 1.
[FIG. 7] FIG. 7 is a schematic perspective view showing a state where a front wall portion is open.
[FIG. 8] FIG. 8 is a schematic perspective view showing a state where the cover member is being pulled out.
[FIG. 9] FIG. 9 is a schematic perspective view of a linear motion unit in Embodiment 2 of the present disclosure.
[FIG. 10] FIG. 10 is a schematic side view of a cover member included in the linear motion unit shown in FIG. 9.
[FIG. 11] FIG. 11 is a schematic perspective view of the linear motion unit shown in FIG. 9, with its cover member removed.
[FIG. 12] FIG. 12 is a schematic perspective view showing a state where the cover member is being pulled out.
[FIG. 13] FIG. 13 is a schematic perspective view of a linear motion unit in Embodiment 3 of the present disclosure.
[FIG. 14] FIG. 14 is a schematic perspective view showing a state where a front wall portion is open.
[FIG. 15] FIG. 15 is a schematic perspective view showing a state where the cover member is being pulled out.

### Description of Embodiments

### [Outline of Embodiments]

A linear motion unit of the present disclosure includes: a linear motion mechanism; and an enclosure that houses the linear motion mechanism. The linear motion mechanism includes a raceway member, and a moving member that is linearly movable along a longitudinal direction of the raceway member. The enclosure includes a cover member that covers the linear motion mechanism. The cover member includes a fastener that extends in the longitudinal direction. The fastener includes a first element extending in the longitudinal direction, a second element extending in the longitudinal direction along the first element and engageable with the first element, a first slider attached to the first and second elements, and a second slider attached to the first and second elements and located apart from the first slider in the longitudinal direction. The first slider and the second slider each separate the first element and the second element from each other as the slider moves in a direction opposite to a side where the other slider is located, and engage the first element and the second element with each other as the slider moves in a direction toward the side where the other slider is located. The first and second sliders can be fixed to the moving member. The fastener extends to reach at least one end of the cover member in the longitudinal direction. The one end of the cover member is configured to be openable and closable.

According to the linear motion unit of the present disclosure, when the cover member is to be removed from the linear motion unit for replacement of the cover member or other purposes, one end of the cover member is opened, and the cover member is pulled out toward the other end side. This allows the cover member to be pulled out as is, because the fastener extends to reach the one end of the cover member. Therefore, the cover member can be removed from the linear motion unit without the need to remove the moving member to which the first and second sliders are fixed. Consequently, at the time of removal of the cover member, the steps of removing and reattaching the moving member can be omitted. Accordingly, such a linear motion unit can improve workability during replacement of the cover member.

In the linear motion unit described above, the fastener may extend to reach both ends in the longitudinal direction of the cover member. The both ends of the cover member may be configured to be openable and closable. With this configuration, the cover member can be removed from the linear motion unit by pulling out the cover member at either end in the longitudinal direction. This can enhance the convenience of replacing the cover member.

In the linear motion unit described above, the cover member may include side wall portions located on side surface sides of the linear motion mechanism, a top wall portion continuous from the side wall portions and located above the linear motion mechanism, the top wall portion having the fastener provided thereon, a front wall portion located at one end in the longitudinal direction, and a rear wall portion located at the other end in the longitudinal direction. At least one of the front wall portion and the rear wall portion may be configured to be openable and closable. With this configuration, the linear motion mechanism can be surrounded by the side wall portions, the top wall portion, the front wall portion, and the rear wall portion, and the cover member can be pulled out from either one side of the front and rear wall portions. Accordingly, it becomes possible to enhance the dust-proof property of the linear motion mechanism by more appropriately covering the linear motion mechanism with the cover member, while also improving the workability.

In the linear motion unit described above, the at least one of the front wall portion and the rear wall portion may be formed by bending a first end region in the longitudinal direction of the top wall portion and second end regions in the longitudinal direction of the side wall portions. Forming at least one of the front and rear wall portions in this manner facilitates achieving the openable and closable configuration described above. Accordingly, the workability can further be improved.

In the linear motion unit described above, a plurality of fasteners may be provided spaced apart from each other in a direction crossing the longitudinal direction. With this configuration, even in the case where more than one fastener is used, the cover member can readily be removed, ensuring improved workability.

In the linear motion unit described above, the raceway member may have a first rolling surface formed thereon to extend in the longitudinal direction. The moving member may have a second rolling surface formed thereon to face the first rolling surface and to form a rolling element rolling path between the first rolling surface and the second rolling surface. The linear motion mechanism may further include a plurality of rolling elements that circulate through a rolling element circulation passage, including the rolling element rolling path, along with linear movement of the moving member in the longitudinal direction of the raceway member. Such a linear motion mechanism can smoothly move the moving member by utilizing the rolling elements.

In the linear motion unit described above, the linear motion mechanism may include a triangular-threaded screw, a trapezoidal-threaded screw, a square-threaded screw, or a ball screw. Such a linear motion mechanism can move the moving mechanism by rotating the screw shaft with a motor or the like, and can be effectively utilized for an actuator or the like.

In the linear motion unit described above, the enclosure may include a base plate. The cover member may be attached to the base plate. The linear motion mechanism may be placed within a space that is surrounded by the cover member and the base plate. This facilitates sealing the linear motion mechanism with the base plate and the cover member. Accordingly, the dust-proof property can be improved.

### [Specific Embodiments]

Specific embodiments of the linear motion unit of the present disclosure will be described below with reference to the drawings. In the drawings referenced below, the same or corresponding portions are denoted by the same reference numerals and the description thereof will not be repeated.

### (Embodiment 1)

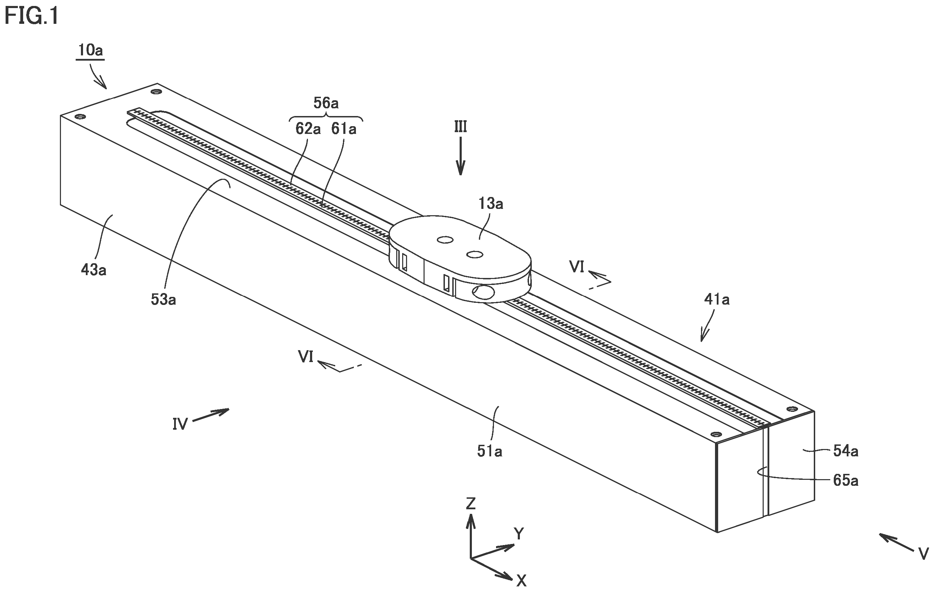

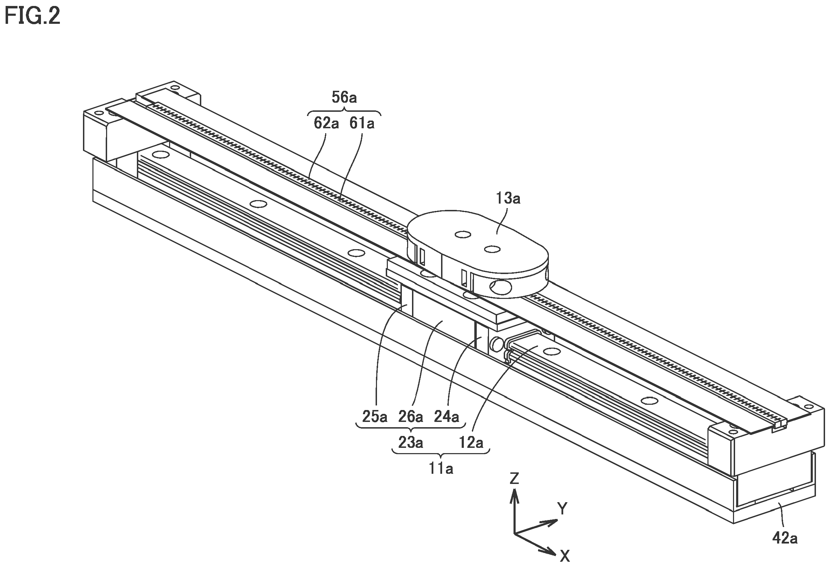

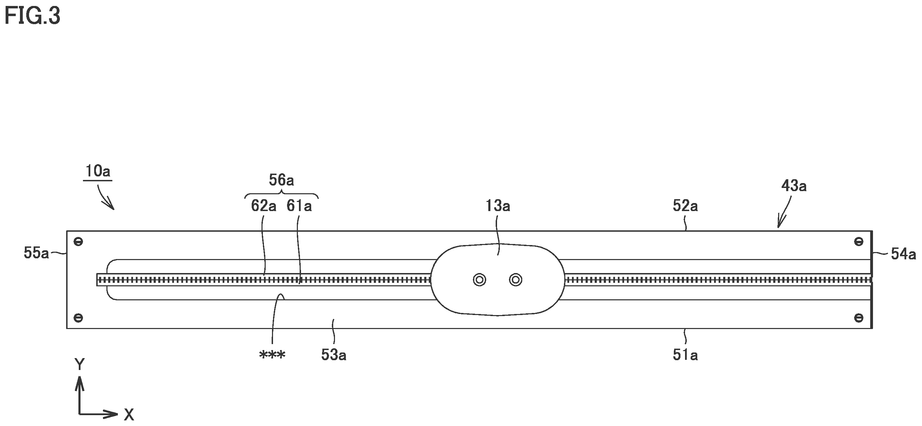

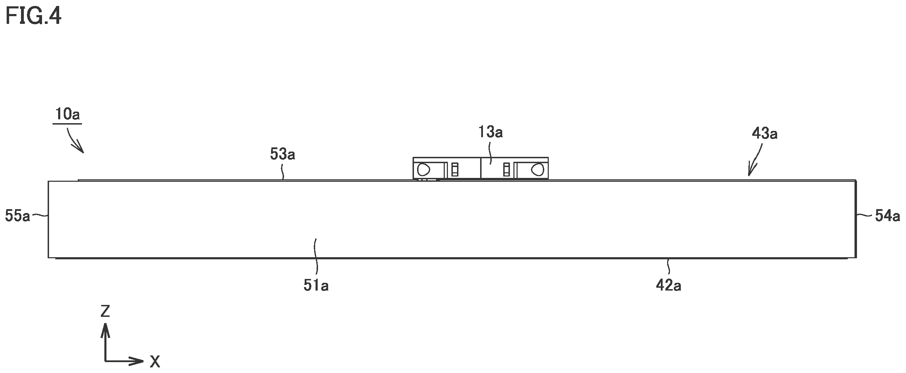

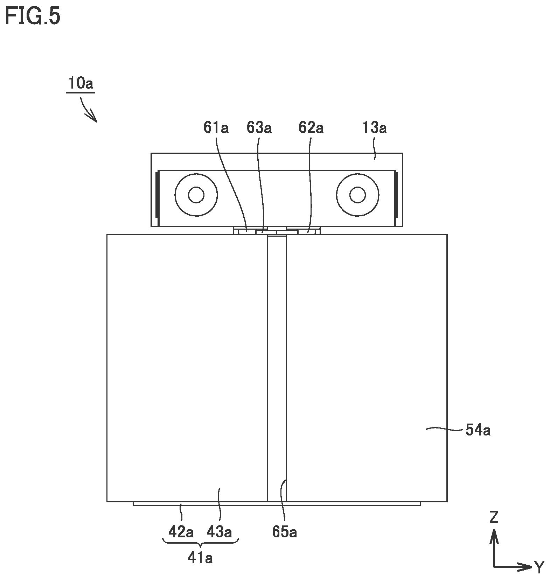

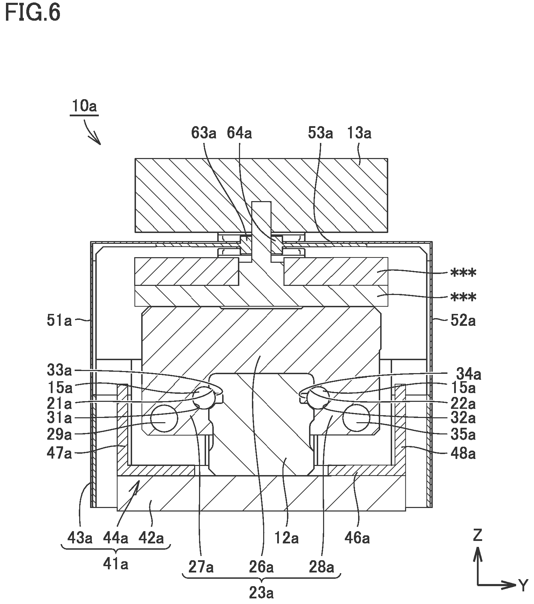

An embodiment of the present disclosure, Embodiment 1, will be described first. FIG. 1 is a schematic perspective view of a linear motion unit in Embodiment 1 of the present disclosure. FIG. 2 is a schematic perspective view of the linear motion unit shown in FIG. 1, with a cover member, described later, removed. FIG. 3 is a schematic plan view of the linear motion unit shown in FIG. 1. FIG. 3 is a view of the linear motion unit in the direction indicated by arrow III in FIG. 1. FIG. 4 is a schematic side view of the linear motion unit shown in FIG. 1. FIG. 4 is a view of the linear motion unit in the direction indicated by arrow IV in FIG. 1. FIG. 5 is a schematic front view of the linear motion unit shown in FIG. 1. FIG. 5 is a view of the linear motion unit in the direction indicated by arrow V in FIG. 1. FIG. 6 is a schematic cross-sectional view of the linear motion unit shown in FIG. 1. FIG. 6 is a cross-sectional view taken along line VI-VI in FIG. 1. In FIG. 1 and the following figures, the X direction indicates the longitudinal direction of the linear motion unit, the Y direction indicates the lateral direction, which is the width direction, of the linear motion unit, and the Z direction indicates the thickness direction (height direction) (up-and-down direction) of the linear motion unit. The X, Y, and Z directions are orthogonal to each other. It should be noted that the direction indicated by arrow X is the direction from rear to front. For ease of understanding, FIG. 2 also shows a fastener, which will be described later.

Referring to FIGS. 1, 2, 3, 4, 5, and 6, the linear motion unit 10a of Embodiment 1 of the present disclosure includes a linear motion mechanism 11a, and an enclosure 41a that houses the linear motion mechanism 11a. In the present embodiment, the linear motion unit 10a is composed of the linear motion mechanism 11a and the enclosure 41a.

The linear motion mechanism 11a includes a rail 12a as a raceway member, and a slide block 13a as a moving member which is attached to the rail 12a. The slide block 13a is linearly movable along the longitudinal direction of the raceway member. The rail 12a extends linearly in the longitudinal direction (X direction). The rail 12a has a plurality of through holes of round hole shape that extend therethrough in the thickness direction (Z direction). The through holes are formed apart from each other in the longitudinal direction. These through holes are utilized for mounting the linear motion unit 10a, or for other purposes.

The rail 12a has a pair of first rolling surfaces 21a and 22a provided on the respective sides in the width direction (Y direction). The first rolling surfaces 21a and 22a each extend in the longitudinal direction over the entire rail 12a.

The slide block 13a is linearly movable along the longitudinal direction of the rail 12a. Referring to FIG. 2 in particular, the slide block 13a includes a carriage 23a, and a pair of end caps (first end cap 24a and second end cap 25a) arranged on both sides in the longitudinal direction of the carriage 23a. The carriage 23a includes a carriage body 26a extending in the width direction, and a pair of sleeves (first sleeve 27a and second sleeve 28a) extending in the thickness direction from both sides of the carriage body 26a.

The first sleeve 27a extends in the height direction toward the rail 12a side from an end portion on one side in the width direction of the carriage body 26a. The first sleeve 27a has formed thereon a second rolling surface 31a that faces the first rolling surface 21a and forms a first rolling element rolling path 33a between the first rolling surface 21a and the second rolling surface 31a. The second rolling surface 31a is formed in a region of the first sleeve 27a facing the rail 12a side. In the first rolling element rolling path 33a, a plurality of rolling elements, specifically balls 15a, are arranged side by side in the longitudinal direction. It should be noted that the type of rolling elements is not limited to balls; it may be rollers, for example.

The first sleeve 27a has a first return passage 29a formed therein. The first return passage 29a extends along the first rolling surface 21a. The first return passage 29a is a through hole of round hole shape that extends through the first sleeve 27a in the longitudinal direction. The first return passage 29a is formed in a position that is farther from the end portion on the one side of the carriage body 26a than the second rolling surface 31a.

The second sleeve 28a extends in the height direction toward the rail 12a side from an end portion on the other side in the width direction of the carriage body 26a. The second sleeve 28a has formed thereon a second rolling surface 32a that faces the first rolling surface 22a and forms a second rolling element rolling path 34a between the first rolling surface 22a and the second rolling surface 32a. The second rolling surface 32a is formed in a region of the second sleeve 28a facing the rail 12a side. In the second rolling element rolling path 34a, a plurality of rolling elements, specifically balls 15a, are arranged side by side in the longitudinal direction.

The second sleeve 28a has a second return passage 35a formed therein. The second return passage 35a extends along the first rolling surface 22a. The second return passage 35a is a through hole of round hole shape that extends through the second sleeve 28a in the longitudinal direction. The second return passage 35a is formed in a position that is farther from the end portion on the other side of the carriage body 26a than the second rolling surface 32a.

In the first end cap 24a, a first turnaround passage (not shown) connecting the first rolling element rolling path 33a with the first return passage 29a and a second turnaround passage (not shown) connecting the second return passage 35a with the second rolling element rolling path 34a are formed. Similarly, in the second end cap 25a, a first turnaround passage (not shown) connecting the first rolling element rolling path 33a with the first return passage 29a and a second turnaround passage (not shown) connecting the second return passage 35a with the second rolling element rolling path 34a are formed.

The slide block 13a has formed therein an annular first rolling element circulation passage which is composed of the first rolling element rolling path 33a, the first return passage 29a, and the first turnaround passages. The slide block 13a has also formed therein a second rolling element circulation passage which is composed of the second rolling element rolling path 34a, the second return passage 35a, and the second turnaround passages. As the slide block 13a linearly moves along the longitudinal direction of the rail 12a, the balls 15a circulate through the first and second rolling element circulation passages.

In the present embodiment, the enclosure 41a has a rectangular parallelepiped shape that is long in the longitudinal direction. The enclosure 41a is box-shaped and includes a base plate 42a, a cover member 43a, and a stay member 44a.

The base plate 42a is of a plate shape extending in the longitudinal direction. The base plate 42a has a flat plate shape. The base plate 42a has a rectangular shape that is long in the longitudinal direction when viewed in the thickness direction. The stay member 44a is placed on the base plate 42a. The stay member 44a has a shape extending in the longitudinal direction. The stay member 44a includes a first stay 46a of flat plate shape, arranged in contact with the base plate 42a, and a pair of second stays 47a and 48a that are continuous from the first stay 46a and face each other with a space therebetween in the width direction. In the present embodiment, the linear motion mechanism 11a is arranged above the base plate 42a via the first stay 46a included in the stay member 44a.

The cover member 43a has an outer shape of rectangular parallelepiped shape extending in the longitudinal direction. The cover member 43a is arranged above the base plate 42a. The cover member 43a covers the linear motion mechanism 11a. The cover member 43a includes a pair of side wall portions 51a and 52a, located on side surfaces sides of the linear motion mechanism, a top wall portion 53a continuous from the pair of side wall portions 51a and 52a and located above the linear motion mechanism 11a, a front wall portion 54a located at one end in the longitudinal direction, and a rear wall portion 55a located at the other end in the longitudinal direction. The pair of side wall portions 51a and 52a face each other in the width direction. The front wall portion 54a and the rear wall portion 55a face each other in the longitudinal direction.

The top wall portion 53a of the cover member 43a is provided with a fastener 56a that extends in the longitudinal direction. The fastener 56a includes a first element 61a, extending in the longitudinal direction, a second element 62a, extending in the longitudinal direction along the first element 61a, a first slider 63a, and a second slider 64a. The second element 62a is provided to be engageable with the first element 61a. The first slider 63a is attached to the first element 61a and the second element 62a. The second slider 64a is also attached to the first element 61a and the second element 62a. The second slider 64a is located apart from the first slider 63a in the longitudinal direction. The first slider 63a and the second slider 64a each separate the first element 61a and the second element 62a from each other as the slider moves in a direction opposite to a side where the other slider is located, and engage the first element 61a and the second element 62a with each other as the slider moves in a direction toward the side where the other slider is located.

The slide block 13a is attached to the first slider 63a and the second slider 64a. In the present embodiment, the slide block 13a is fixed to the first slider 63a and the second slider 64a. The slide block 13a is located above the top wall portion 53a of the cover member 43a. In other words, the slide block 13a is not covered with the cover member 43a, and is exposed from the cover member 43a.

Here, the fastener 56a extends to reach one end of the cover member 43a in the longitudinal direction. Specifically, the fastener 56a reaches the front wall portion 54a of the cover member 43a. It should be noted that the fastener 56a does not reach the rear wall portion 55a of the cover member 43a.

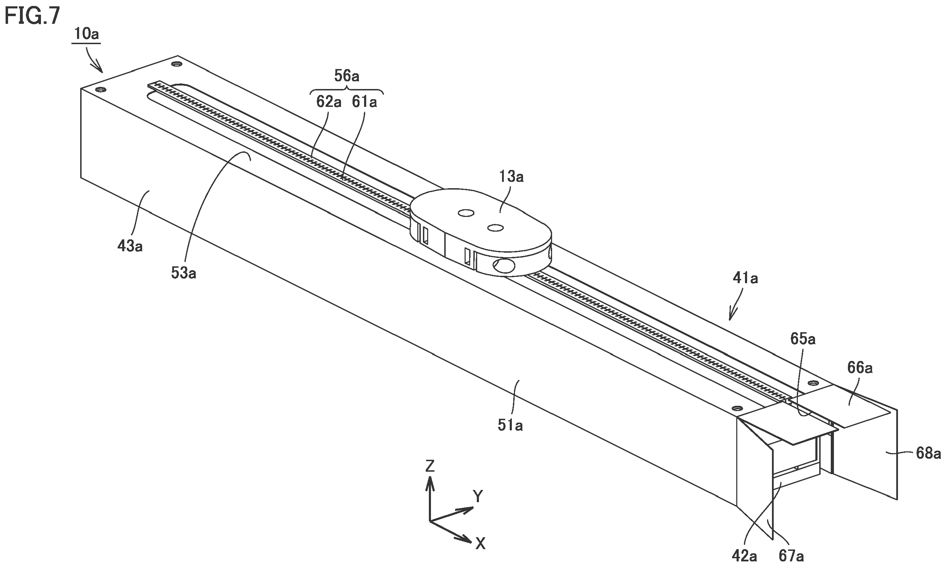

Here, the one end of the cover member 43a is configured to be openable and closable. In the present embodiment, the front wall portion 54a located at one end of the cover member 43a is configured to be openable and closable. FIG. 7 is a schematic perspective view showing the front wall portion 54a in an open state. FIG. 1 shows the front wall portion 54a in a closed state. Referring to FIG. 7 together, the front wall portion 54a is provided with a slit 65a that extends in the height direction. The slit 65a is located at the center in the width direction. The front wall portion 54a is formed by bending a first end region 66a in the longitudinal direction of the top wall portion 53a and second end regions 67a and 68a in the longitudinal direction of the pair of side wall portions 51a and 52a, respectively. In the present embodiment, the slit 65a separates the first end region 66a into two portions, which are each connected to the top wall portion 53a.

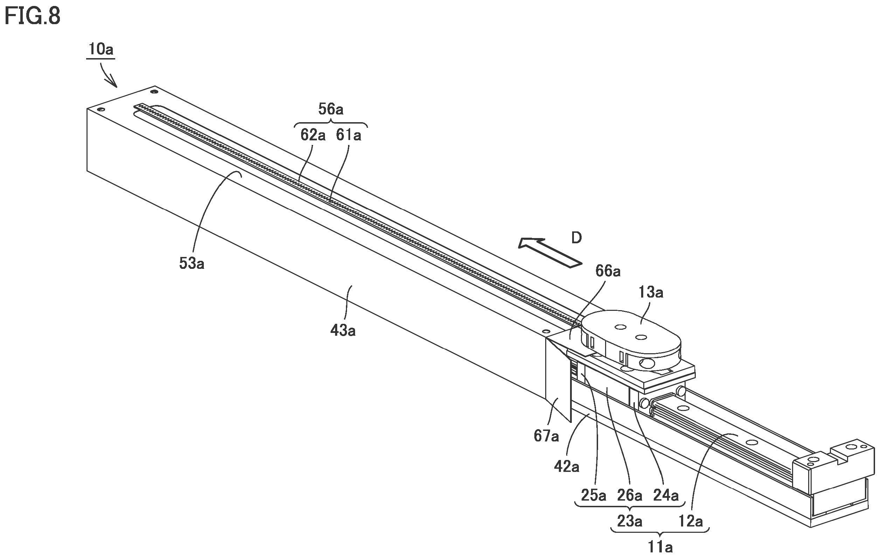

An example of the way of removing the cover member 43a will now be briefly described. Firstly, the slide block 13a as the moving member is moved together with the first slider 63a and the second slider 64a to a region where the front wall portion 54a is located. The front wall portion 54a is then opened as shown in FIG. 7. In this case, the bent states of the first end region 66a and the second end regions 67a and 68a are released. Then, referring to FIG. 8 together, the cover member 43a is pulled out in a direction of arrow D (opposite to the direction of arrow X). FIG. 8 is a schematic perspective view showing the state where the cover member 43a is being pulled out. This enables the cover member 43a to be pulled out alone, with the first slider 63a and the second slider 64a being kept attached to the slide block 13a. It should be noted that a new cover member can be applied in a reverse procedure to the removal procedure.

According to the linear motion unit 10a described above, at the time of removing the cover member 43a from the linear motion unit 10a, such as for replacement of the cover member 43a, the front wall portion 54a that constitutes one end of the cover member 43a is opened, and the cover member 43a is pulled out toward the other end. This allows the cover member 43a to be pulled out as is, because the fastener 56a extends to reach the one end of the cover member 43a. Therefore, the cover member 43a can be removed from the linear motion unit 10a without the need to remove the slide block 13a to which the first slider 63a and the second slider 64a are fixed. Consequently, at the time of removal of the cover member 43a, the steps of removing and reattaching the slide block 13a as the moving member can be omitted. Accordingly, this linear motion unit 10a can improve workability during replacement of the cover member 43a.

In the present embodiment, the cover member 43a includes the side wall portions 51a and 52a located on the side surface sides of the linear motion mechanism 11a, the top wall portion 53a continuous from the side wall portions 51a and 52a and located above the linear motion mechanism 11a, the top wall portion having the fastener 56a provided thereon, the front wall portion 54a located at one end in the longitudinal direction, and the rear wall portion 55a located at the other end in the longitudinal direction. The front wall portion 54a is configured to be openable and closable. Therefore, the linear motion mechanism 11a can be surrounded by the side wall portions 51a, 52a, the top wall portion 53a, the front wall portion 54a, and the rear wall portion 55a, and the cover member 43a can be pulled out from the rear wall portion 55a side. Accordingly, it becomes possible to enhance the dust-proof property of the linear motion mechanism 11a by more appropriately covering the linear motion mechanism 11a with the cover member 43a, while also improving the workability.

In the present embodiment, the front wall portion 54a is formed by bending the first end region 66a in the longitudinal direction of the top wall portion 53a and the second end regions 67a and 68a in the longitudinal direction of the side wall portions 51a and 52a. Forming the front wall portion 54a in this manner facilitates achieving the openable and closable configuration described above. Accordingly, the workability can further be improved.

In the present embodiment, the enclosure 41a includes the base plate 42a. The cover member 43a is attached to the base plate 42a. The linear motion mechanism 11a is placed within a space that is surrounded by the cover member 43a and the base plate 42a. This facilitates sealing the linear motion mechanism 11a with the base plate 42a and the cover member 43a. Accordingly, the dust-proof property can be improved. It should be noted that the enclosure 41a may not include the base plate 42a. In other words, the present invention is also applicable to the case where the linear motion mechanism 11a is directly fixed to a counterpart member (attachment position), without the use of the base plate 42a, and the linear motion mechanism 11a is covered with the cover member 43a included in the enclosure 41a.

In the present embodiment, the rail 12a as the raceway member has the first rolling surfaces 21a, 22a formed thereon to extend in the longitudinal direction. The moving member has the second rolling surfaces 31a, 32a formed thereon to face the first rolling surfaces 21a, 22a and to form rolling element rolling paths between the first rolling surfaces 21a, 22a and the second rolling surfaces 31a, 32a. The linear motion mechanism 11a includes the balls 15a as a plurality of rolling elements that circulate through rolling element circulation passages, including the rolling element rolling paths, along with linear movement of the moving member in the longitudinal direction of the raceway member. Such a linear motion mechanism can smoothly move the moving member by utilizing the balls 15a.

While the front wall portion is configured to be openable and closable in the above embodiment, not limited thereto, at least one of the front wall portion and the rear wall portion may be configured to be openable and closable. In such a case, the linear motion mechanism can be surrounded by the side wall portions, the top wall portion, the front wall portion, and the rear wall portion, and the cover member can be pulled out from either one of the front and rear wall portions. Accordingly, it is possible to enhance the dust-proof property of the linear motion mechanism by more appropriately covering the linear motion mechanism with the cover member, while also improving the workability.

### (Embodiment 2)

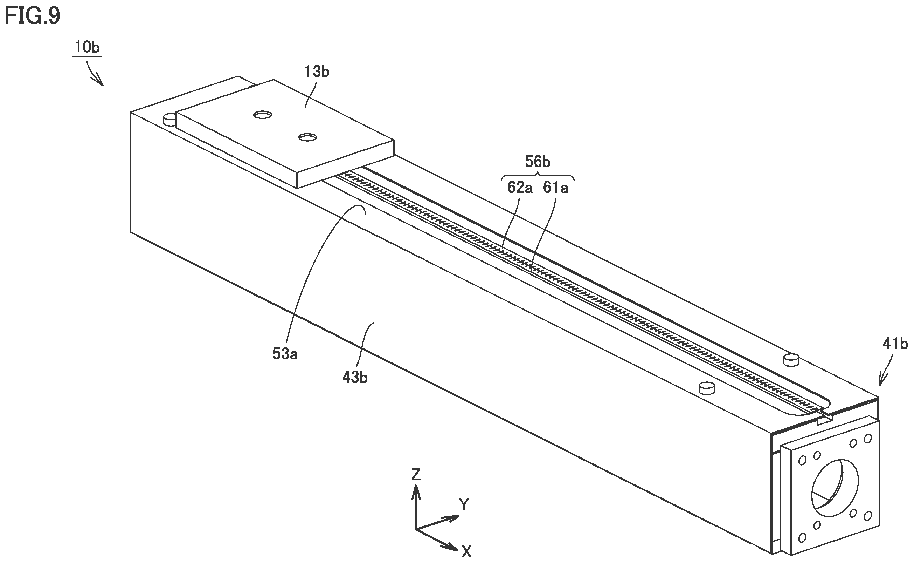

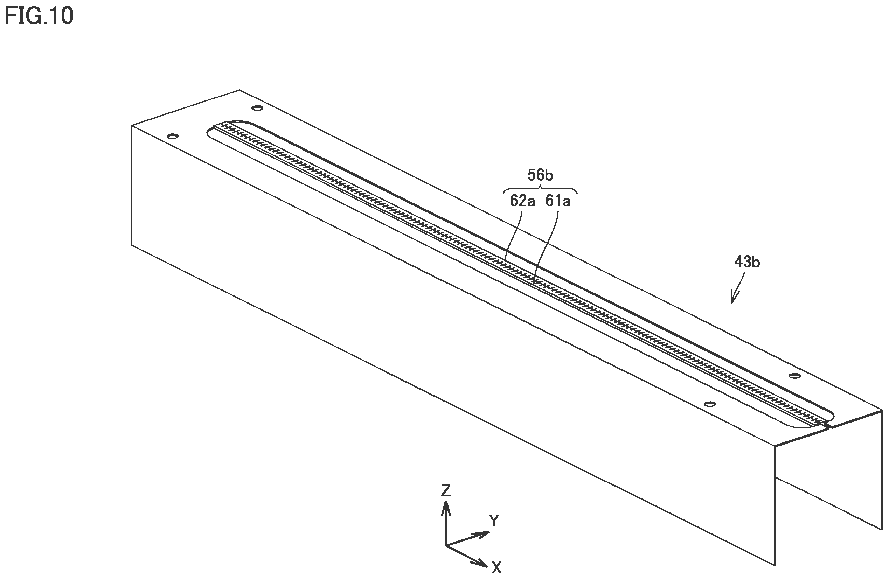

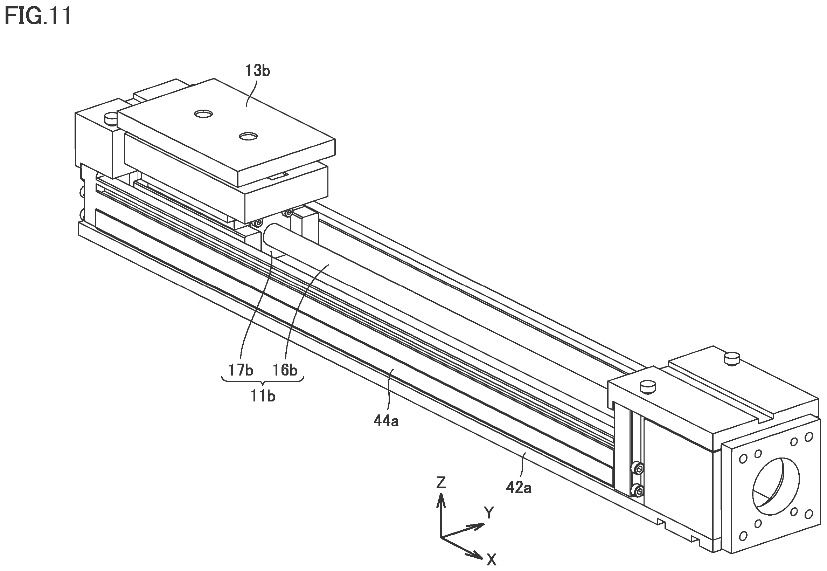

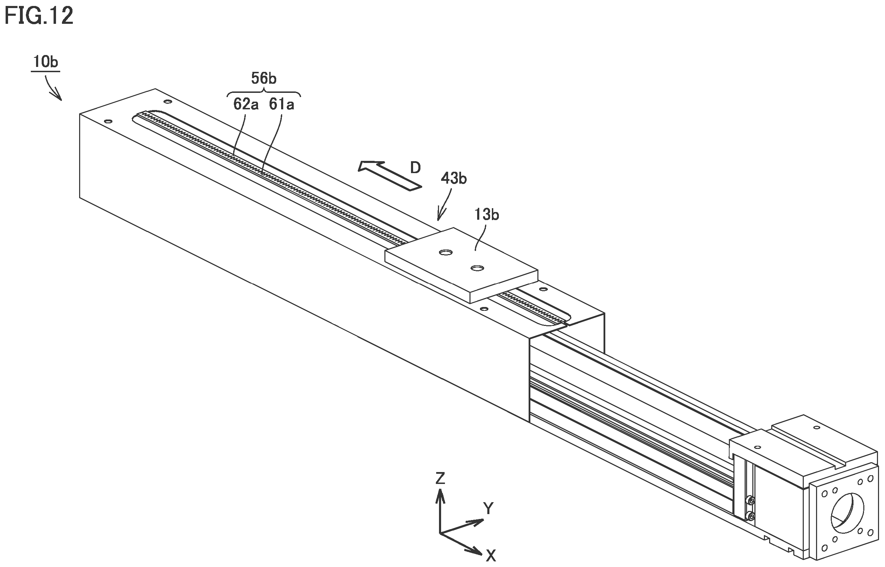

Another embodiment, Embodiment 2, will now be described. FIG. 9 is a schematic perspective view of a linear motion unit in Embodiment 2 of the present disclosure. FIG. 10 is a schematic side view of a cover member included in the linear motion unit shown in FIG. 9. FIG. 11 is a schematic perspective view of the linear motion unit shown in FIG. 9, with its cover member removed. FIG. 12 is a schematic perspective view showing a state where the cover member is being pulled out. The linear motion unit of Embodiment 2 basically has the configuration similar to that of Embodiment 1 and achieves the similar effects. However, the linear motion unit of Embodiment 2 differs from that of Embodiment 1 mainly in that the linear motion mechanism is a ball screw.

Referring to FIGS. 9, 10, 11, and 12, the linear motion unit 10b of Embodiment 2 includes an enclosure 41b that includes a cover member 43b, and a ball screw 11b as a linear motion mechanism. The ball screw 11b includes a screw shaft 16b as a raceway member, and a nut 17b. The nut 17b has a slide block 13b as a moving member fixed thereto. Rotation of the screw shaft 16b enables linear movement of the nut 17b and the slide block 13b fixed to the nut 17b along the X direction, which is the longitudinal direction of the screw shaft.

Here, the cover member 43b is provided with a fastener 56b that extends in the longitudinal direction. The fastener 56b reaches one end in the longitudinal direction of the cover member 43b. The one end of the cover member 43b is configured to be openable and closable.

Such a configuration also allows the cover member 43b to be removed from the linear motion unit 10b without removing the slide block 13b. As a result, at the time of removal of the cover member 43b, the steps of removing and reattaching the slide block 13b, which is the moving member, can be omitted. Accordingly, this linear motion unit 10b can improve workability during replacement of the cover member 43b.

While the linear motion unit 10b includes the ball screw 11b as the linear motion mechanism in the above embodiment, the linear motion mechanism is not limited thereto; it may be a triangular-threaded screw, a trapezoidal-threaded screw, or a square-threaded screw, which are leadscrews. In other words, the linear motion mechanism included in the linear motion unit 10b may include a triangular-threaded screw, a trapezoidal-threaded screw, a square-threaded screw, or a ball screw. Such a linear motion mechanism can move the moving mechanism by rotating the screw shaft with a motor or the like, and can be effectively utilized for an actuator or the like.

### (Embodiment 3)

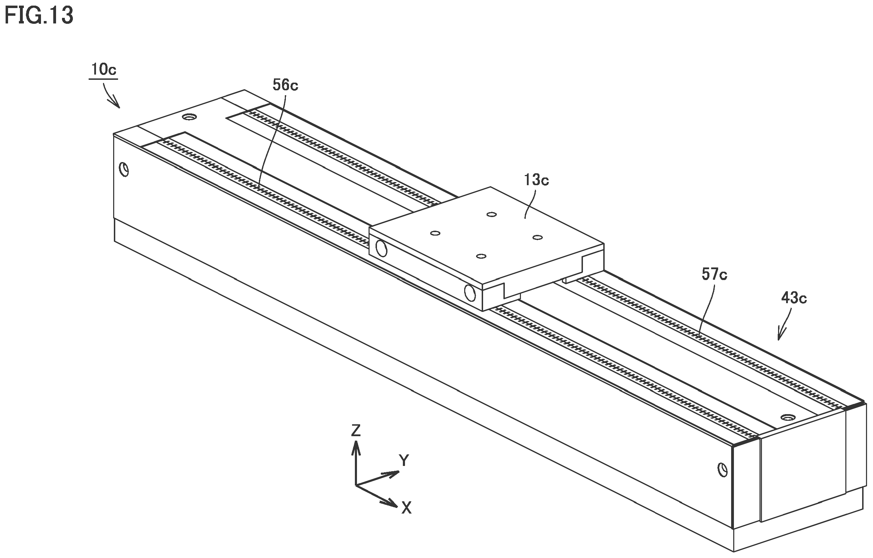

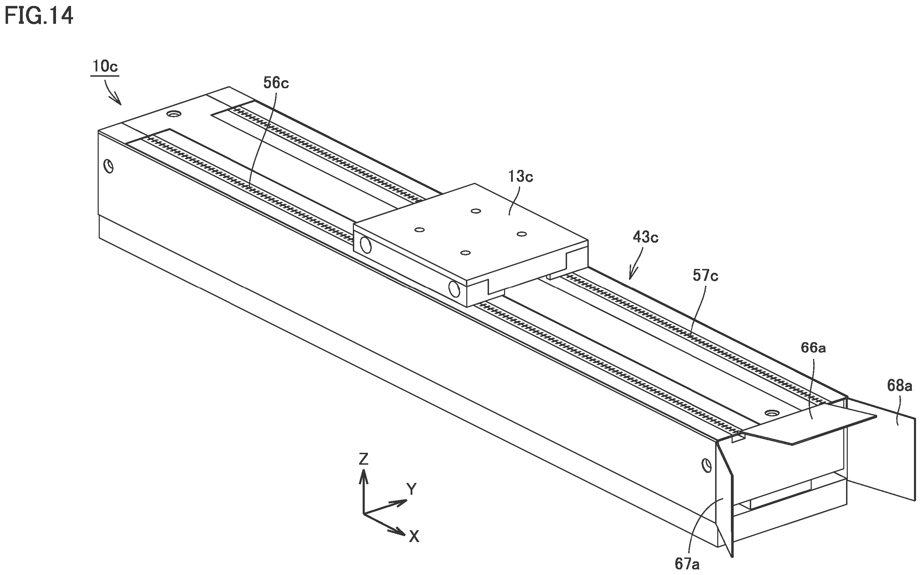

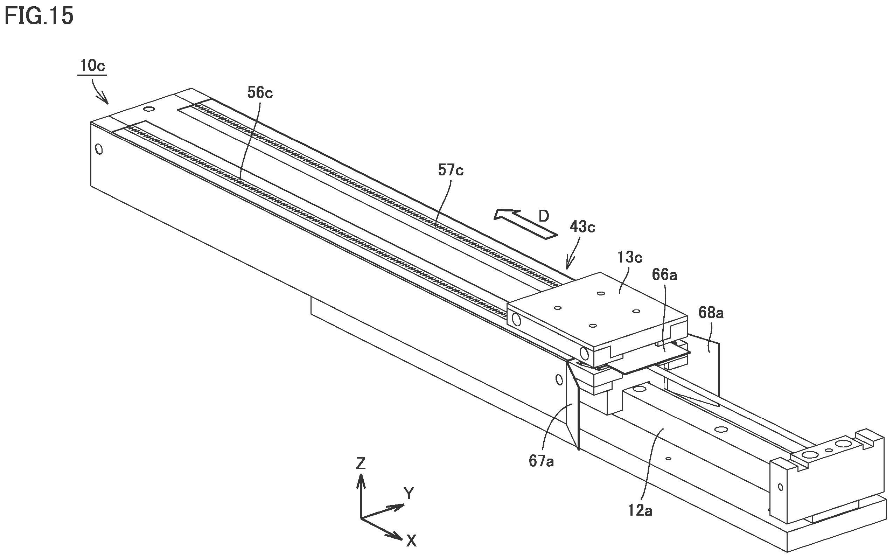

Yet another embodiment, Embodiment 3, will now be described. FIG. 13 is a schematic perspective view of a linear motion unit in Embodiment 3 of the present disclosure. FIG. 14 is a schematic perspective view showing a state where a front wall portion is open. FIG. 15 is a schematic perspective view showing a state where the cover member is being pulled out. The linear motion unit of Embodiment 3 basically has the configuration similar to that of Embodiment 1 and achieves the similar effects. However, the linear motion unit of Embodiment 3 differs from that of Embodiment 1 mainly in that it includes a plurality of fasteners.

Referring to FIGS. 13, 14, and 15, the linear motion unit 10c of Embodiment 2 includes a cover member 43c. The cover member 43c includes a plurality of fasteners 56c, 57c, specifically two fasteners 56c and 57c. The fasteners 56c and 57c are arranged spaced apart from each other in a direction crossing the longitudinal direction, which is the width direction orthogonal to the longitudinal direction in the present embodiment. Even in such a case that a plurality of fasteners 56c, 57c are used, the cover member 43c can readily be removed, leading to improved workability.

It should be understood that the embodiments disclosed herein are illustrative and non-restrictive in every respect. The scope of the present invention is defined by the terms of the claims, and is intended to include any modifications within the scope and meaning equivalent to the terms of the claims.

### Reference Signs List

10a, 10b, 10c: linear motion unit; 11a: linear motion mechanism; 11b: ball screw; 12a: rail; 13a, 13b: slide block; 15a: ball; 16b: screw shaft; 17b: nut; 21a, 22a: first rolling surface; 23a: carriage; 24a: first end cap; 25a: second end cap; 26a: carriage body; 27a: first sleeve; 28a: second sleeve; 29a: first return passage; 31a, 32a: second rolling surface; 33a: first rolling element rolling path; 34a: second rolling element rolling path; 35a: second return passage; 41a, 41b: enclosure; 42a: base plate; 43a, 43b, 43c: cover member; 44a: stay member; 46a: first stay; 47a, 48a: second stay; 51a, 52a: side wall portion; 53a: top wall portion; 54a: front wall portion; 55a: rear wall portion; 56a, 56b, 56c, 57c: fastener; 61a: first element; 62a: second element; 63a: first slider; 64a: second slider; 65a: slit; 66a: first end region; and 67a, 68a: second end region.

## Claims

1. A linear motion unit comprising:
a linear motion mechanism; and
an enclosure that houses the linear motion mechanism;
the linear motion mechanism including
a raceway member, and
a moving member linearly movable along a longitudinal direction of the raceway member,
the enclosure including a cover member that covers the linear motion mechanism,
the cover member including a fastener that extends in the longitudinal direction,
the fastener including
a first element extending in the longitudinal direction,
a second element extending in the longitudinal direction along the first element and engageable with the first element,
a first slider attached to the first and second elements, and
a second slider attached to the first and second elements and located apart from the first slider in the longitudinal direction,
the first slider and the second slider each separating the first element and the second element from each other as the slider moves in a direction opposite to a side where the other slider is located, and engaging the first element and the second element with each other as the slider moves in a direction toward the side where the other slider is located,
the first and second sliders being capable of being fixed to the moving member,
the fastener extending to reach at least one end of the cover member in the longitudinal direction,
the one end of the cover member being configured to be openable and closable.

2. The linear motion unit according to claim 1, wherein
the fastener extends to reach both ends in the longitudinal direction of the cover member, and
the both ends of the cover member are configured to be openable and closable.

3. The linear motion unit according to claim 1 or 2, wherein
the cover member includes
side wall portions located on side surface sides of the linear motion mechanism,
a top wall portion continuous from the side wall portions and located above the linear motion mechanism, the top wall portion having the fastener provided thereon,
a front wall portion located at one end in the longitudinal direction, and
a rear wall portion located at the other end in the longitudinal direction, and
at least one of the front wall portion and the rear wall portion is configured to be openable and closable.

4. The linear motion unit according to claim 3, wherein the at least one of the front wall portion and the rear wall portion is formed by bending a first end region in the longitudinal direction of the top wall portion and second end regions in the longitudinal direction of the side wall portions.

5. The linear motion unit according to claim 1 or 2, wherein a plurality of said fasteners are provided spaced apart from each other in a direction crossing the longitudinal direction.

6. The linear motion unit according to claim 1 or 2, wherein
the raceway member has a first rolling surface formed thereon to extend in the longitudinal direction,
the moving member has a second rolling surface formed thereon to face the first rolling surface and to form a rolling element rolling path between the first rolling surface and the second rolling surface, and
the linear motion mechanism further includes a plurality of rolling elements that circulate through a rolling element circulation passage, including the rolling element rolling path, along with linear movement of the moving member in the longitudinal direction of the raceway member.

7. The linear motion unit according to claim 1 or 2, wherein the linear motion mechanism includes a triangular-threaded screw, a trapezoidal-threaded screw, a square-threaded screw, or a ball screw.

8. The linear motion unit according to claim 1 or 2, wherein
the enclosure includes a base plate,
the cover member is attached to the base plate, and
the linear motion mechanism is placed within a space that is surrounded by the cover member and the base plate.
